# EUROPÄISCHE PATENTSCHRIFT

(11) **EP 2 702 203 B1**
(45) Veröffentlichungstag und Bekanntmachung des Hinweises auf die Patenterteilung: **17.06.2015**
(21) Anmeldenummer: 12705288.4
(22) Anmeldetag: 21.02.2012
(51) Int. Cl.: D21F 1/00

(54) **STABILISIERTE WEBNAHT FÜR FLACHGEWEBTE ENDLOSGEWEBEBÄNDER**
STABILIZED WOVEN SEAM FOR FLAT WOVEN ENDLESS FABRICS
JOINTURE TISSEE STABILISEE POUR TOILES SANS FIN TISSEES A PLAT

(30) Priorität: 24.02.2011 DE 102011004658
(43) Veröffentlichungstag der Anmeldung: 05.03.2014
(73) Patentinhaber: Voith Patent GmbH, 89522 Heidenheim (DE)
(72) Erfinder: EBERHARDT, Robert, 73479 Ellwangen (DE); STRAUB, Michael, 89555 Steinheim (DE); HOEHSL, Matthias, 89520 Heidenheim (DE)
(86) Internationale Anmeldenummer: PCT/EP2012/052892
(87) Internationale Veröffentlichungsnummer: WO 2012/113767

(56) Entgegenhaltungen:
- EP-A1- 1 749 924
- GB-A- 1 259 287
- US-A1- 2009 139 599

## Beschreibung

Die vorliegende Erfindung betrifft Endlosgewebebänder zum Einsatz in Maschinen für die Papierherstellung und bezieht sich im Besonderen auf die Ausbildung von Webnähten zum Verbinden von Gewebebandenden für die Herstellung von Endlosgewebebändern.

Unter dem Oberbegriff Papier werden Papiere verschiedenster Sorten, Kartone und Pappen zusammengefasst. Die Herstellung von Papier beginnt in der Regel mit dem Ausbilden einer Faserstoffbahn aus einer Faserstoffsuspension in der Formierpartie einer Papiermaschine. Suspension und die sich daraus durch Entwässern entwickelnde Faserstoffbahn liegen auf einem Endlosband auf, das über Walzen umgelenkt innerhalb der Formierpartie umläuft. In nachfolgenden Sektionen der Papiermaschine wird die Blattbildung durch weiteres Entwässern der Faserstoffbahn fortgesetzt, wobei die Faserstoffbahn auch in diesen Sektionen auf einer als Endlosband ausgebildeten Bespannung aufliegend transportiert wird.

Zur raschen Entwässerung von Faserstoffsuspension und Faserstoffbahn weisen die in den einzelnen Sektionen der Papiermaschine, beispielsweise Formier-, Press- oder Trockenpartie verwendeten Transportbänder Durchgänge auf, durch die hindurch Feuchtigkeit in Form von Wasser, Wasserdampf und, bei Durchlüfttrocknern insbesondere auch feuchter Luft, von einer Seite des Bandes zur anderen Seite des Bandes gelangen kann. In einigen Sektionen wie beispielsweise den Presspartien dienen die Durchgänge darüberhinaus auch zum zeitweiligen Speichern von Feuchtigkeit.

Bei Flachgeweben wird die Wasserpermeabilität durch die zwischen den sich überkreuzenden Garnen ausgebildeten Leerräume sichergestellt. Als Flachgewebe werden Gewebe bezeichnet, die keinen Flor besitzen, somit eine zweidimensionale Struktur aufweisen. Flachgewebe können sowohl glatte als auch strukturierte Oberflächen aufweisen. Unter Garn ist ein langes, dünnes und flexibles Gebilde aus einer oder mehreren Fasern zu verstehen, das heißt eine Faser oder ein Faserverbund, dessen Länge seine Querschnittsabmessungen um ein Vielfaches übersteigt. Bei der Herstellung von Gewebebändern für Papiermaschinenbespannungen finden überwiegend polymere Monofilamente Verwendung, das heißt aus einem Polymer in Form einer einzigen Faser gebildete Garne. Bei Pressfilzgrundgeweben werden statt Monofilamenten häufig auch aus Monofilamenten, oder seltener, aus Stapelfasergarnen zusammengedrehte Zwirne verwendet. Die Gewebebänder können dabei entweder selbst die Bespannung bilden, oder wie in der Presspartie als Trägersubstrat für weiter modifizierte Transportbänder, wie z. B. Pressfilze, dienen.

Zur Herstellung von Endlosgewebebändern sind verschiedene Technologien bekannt, beispielsweise Rundweben oder Anweben von Stecknähten zum lösbaren Verbinden der Bespannungsenden. In der Formiersektion und in Durchlüfttrocknern werden üblicherweise aus Monofilamenten hergestellte Flachgewebe bevorzugt, die mittels einer sogenannten Webnaht zu einem Endlosgewebeband geschlossen werden.

Die Herstellung von flachgewebten Endlosbändern für Bespannungen zum Einsatz in Papiermaschinen beginnt üblicherweise mit dem Weben eines flachgewebten Bands in Form von Rollenware, wobei die Kett- bzw. Maschinenrichtungsfäden in Längsrichtung des Bands und die Schuss- bzw. Maschinenquerrichtungsfäden quer zu den Kett- bzw. Maschinenrichtungsfäden zwischen den Seitenkanten der Bänder verlaufen. Im Hinblick auf eine verbesserte mechanische Belastbarkeit wie auch Biegesteifigkeit sind die Flachgewebebänder häufig zwei- oder mehrlagig aufgebaut, wobei sich die einzelnen Weblagen in Material, Stärke und Führung ihrer Garne voneinander unterscheiden können. Durch regelmäßiges Eingreifen von Garnen einer Weblage in die Bindung einer anderen Weblage kann dabei eine stabile flächige Verbindung der einzelnen Weblagen erreicht werden.

Das als Rollenware vorliegende Flachgewebeband wird anschließend auf Länge konfektioniert, und die sich daraus ergebenden Teilstücke über eine deren Stirnkanten verbindende Naht endlos geschlossen. Die Naht erstreckt sich über die gesamte Breite eines Endlosgewebebandes und weist in Laufrichtung des Bandes bei einer Ausführung als Webnaht üblicherweise Längen zwischen 5 und 50 cm auf. Unter Laufrichtung eines Bandes ist hierbei die Bewegungsrichtung des Bandes beim bestimmungsgemäßen Gebrauch in einer Papiermaschine zu verstehen. Für den Jeweils die FaserstoffBahn (oder -suspension) tragenden Teil eines Endlosgewebebandes stimmt diese Richtung mit der als Maschinenrichtung bezeichneten Transportrichtung der Faserstoffbahn überein.

Damit die Webnaht kelne Markierung der Faserstoffbahn verursacht, müssen deren Entwässerungseigenschaften und Oberflächenstruktur so weit als möglich dem des als Vollgewebe bezeichneten restlichen Endlosgewebebands entsprechen. Idealerweise setzt sich die Webstruktur des Vollgewebes in der Webnaht fort, wozu ein quer zur Webrichtung des Vollgewebes vorzunehmender Webprozess erforderlich Ist, der entweder manuell oder auf eigens dazu eingerichteten Web- bzw. Nahtmaschinen, beispielsweise einer entsprechend angepassten Jacquard-Webmaschine, vorgenommen wird.

Zur Herstellung der Webnaht werden an beiden stirnseitigen Enden eines konfektionierten Flachgewebebands zunächst die Schuss- bzw. Maschinenquerrichtungsfäden ausgelöst, um die Enden der Kett- bzw. Maschinenrichtungsfäden freizulegen. Die so freigemachten Kett- bzw. Maschinenrichtungsfadenenden werden anschließend mit neuen Schuss- bzw. Maschinenquerrichtungsfäden zu einem vollständigen Gewebeverband verwoben, wobei die beiden Enden eines jeden Kett- bzw. Maschinenrichtungsfadens in das gleiche Webfach eingelegt und jeweils an einer bestimmten Stelle aus dem Gewebe herausgeführt und später abgeschnitten werden. Bei diesem Webprozess nehmen somit die ursprünglichen Kettfäden die Rolle der Schussfäden und die Schussfäden die Rolle der Kettfäden ein, wobei die für die Webnaht verwendete. Schussfadenstruktur üblicherweise aus einem separaten Gewebebandstreifen durch Herauslösen der Kettfäden gewonnen wird.

Wenn beide Enden eines Kett- bzw. Maschinenrichtungsfadens an der selben Stelle bzw. Gewebepore aus dem Gewebe geführt und abgeschnitten werden, stoßen die Enden eines Kett-bzw. Maschinenrichtungsfadens an dieser Treffstelle mehr oder weniger aneinander. Die Festigkeit solcher Webnähte basiert auf der mechanischen Umklammerung der Fadenkröpfungen an den Kreuzungsstellen von Kett- bzw. Maschinenrichtungs- und Schuss- bzw. Maschinenquerrichtungsfäden. Durch die Zugbelastung des Endlosgewebebands beim Umlauf in einer Papiermaschine werden die Kett- bzw. Maschinenrichtungsfadenenden In einander entgegengesetzte Richtungen gezogen und können in der Folge Ihre Lage relativ zu den Schuss- bzw. Maschinenquerrichtungsfäden ändern und eventuell aus dem Fadenverbund herausschlüpfen. Betroffen sind hierbei Insbesondere die entgegen der Umlaufrichtung des Bands gerichteten Kett- bzw. Maschinenrichtungsfadenenden. Herausgeschlüpfte Kett- bzw. Maschinenrichtungsfadenenden stehen aus dem Gewebe heraus und werden während des Umlaufs in der Maschine bevorzugt abgerieben. Dadurch entstehen in der Webnaht offene Bereiche, die deren Reißfestigkeit mindern und zu ungleichmäßiger Trocknung und Markierung der Faserstoffbahn führen können.

Um die Konzentration der Gewebebelastung auf einen kleinen Teil der Webnaht zu verhindern und hierüber deren Reißfestigkeit zu erhöhen, werden die Treffstellen der Kett- bzw. Maschinenrichtungsfäden über einen Bereich, üblicherweise in etwa den gesamten Bereich der Webnaht, verteilt angeordnet. Die Verteilung der Treffstellen kann dabei eine zufällige bzw. pseudozufällige, oder eine einem Schema bzw. Muster folgende Anordnung aufweisen.

Die Bruchdehnung von wie zuvor beschriebenen Webnähten erreicht Jedoch nur etwa ein Drittel der Bruchdehnung des Vollgewebes. Um die Nahtfestigkeit zu verbessern kann die Länge der Webnaht, das heißt die Ausdehnung der Naht in Umlaufrichtung des Endlosgewebebandes, vergrößert werden. Allerdings nimmt die Nahtfestigkeit nur unterproportional mit der Nahtlänge zu, so dass die Festigkeitsverbesserung bei langen Webnähten in keinem wirtschaftlichen Verhältnis zu deren Herstellungskosten steht.

Eine Verbesserung der Nahtfestigkeit kann auch mithilfe von Interlocks erreicht werden, bei denen die Enden eines Kett- bzw. Maschinenrichtungsfadens so an verschiedenen Stellen aus dem Gewebe geführt werden, dass die Endbereiche des Kett- bzw. Maschinenrichtungsfadens über eine bestimmte Weglänge nebeneinander im Gewebe liegen. Diese Überlappung der Kett-bzw Maschinenrichtungsfadenenden führt jedoch zu einer lokalen Verringerung der zwischen den Garnen ausgebildeten Leeräume, mit der Folge einer lokalen Beeinträchtigung der Wasser- und Luftpermeabilität des Gewebes und damit zu einer gegenüber dem Vollgewebe unterschiedlichen Entwässerung- und Trocknungscharakteristik. Einer Verbesserung der Nahtfestigkeit durch Vergröbern des Interlocks sind ferner durch die unterproportional zur Interlockvergrößerung zunehmenden Nahtfestigkeit Grenzen gesetzt.

Zur Verstärkung von polymeren Geweben ist ferner ein stoffschlüssiges Verbinden von Kett-bzw. Maschinenrichtungs- und Schuss- bzw. Maschinenquerrichtungsfäden mittels Transmissionslaserschweißen bekannt. Das Verschweißen der Garne wird üblicherweise mit einer Laserwellenlänge im Bereich von etwa 700 bis 1200 nm durchgeführt, die von den Garnen des Gewebes nicht bzw. nur unwesentlich absorbiert wird. Um die zum Verschweißen der Garne erforderliche Wärme erzeugen zu können, müssen daher geeignete Lichtabsorptionszonen geschaffen werden. Dies kann durch - eventuell selektives - Beschichten der Garne mit speziellen Absorbern oder Farbstoffen erfolgen oder mittels Verwendung von Gammaterialien, die bereits geeignete Absorptionsstoffe, beispielsweise Ruß, Kohlenstoffnanoröhren oder im oben angegebenen Lichtwellenbereich absorbierende Farbstoffe, enthalten. Ein solcherart durchgeführtes Transmissionslaserverschweißen von Garnüberkreuzungen im Webnahtbereich eines Endlosflachgewebebands resultiert allerdings in einer gegenüber dem Vollgewebe des Bandes höheren Steifigkeit der Webnaht.

Aus der US2009//0139599 sind Endlosgewebebänder bekannt, die aus einem Flachgewebeband mit Enden und einer die Enden des Flachgewebebands zum Endlosflachgewebeband verbindenden Webnaht hergestellt ist. Bei diesen Endlosgewebebändern sind Garne an Überkreuzungsstellen von Kett- bzw. Maschinenrichtungsfäden und Schuss- bzw. Maschinenquerrichtungsfäden mittels eines am Garnkontaktbereich der Überkreuzungsstellen angeordneten und Licht aus dem Wellenlängenbereich von 700 bis 1200 nm absorbierenden Materials stoffschlüssig miteinander verbunden,

Ausgehend von dem Dargelegten ist es daher wünschenswert eine per Transmissionslaserverschweißen von Garnüberkreuzungen stabilisierte Webnaht für ein Endlosflachgewebeband und ein Verfahren zu deren Herstellung anzugeben, die eine gegenüber dem oben Beschriebenen geringere Steifigkeit, bzw. eine dem Vollgewebe des Endlosflachgewebebands ähnliche Flexibilität aufweist.

Diese Aufgabe wird ein Endlosgewebeband gemäß Anspruch 1 und ein Verfahren gemäß Anspruch 6 gelöst. Solche Endlosflachgewebebänder sind mit sich überkreuzenden Fäden wenigstens die Kett- bzw. Maschinenrichtungsfäden oder die Schuss- bzw. Maschinenquerrichtungsfäden von aus einem thermoplastischen Polymer gefertigten Garnen gebildet, das für Licht einer Wellenlänge aus einem Wellenlängenbereich von 700 bis 1200nm (naher Infrarot (NIR) Bereich) transparent ist, und zumindest ein Teil der Garne ist an Überkreuzungsstellen von Kett- bzw.. Maschinenrichtungsfäden und Schuss- bzw. Maschinenquerrichtungsfäden mittels eines am Garnkontaktbereich der Überkreuzungsstellen angeordneten und Licht aus dem Wellenlängenbereich von 700 bis 1200nm absorbierenden Materials stoffschlüssig miteinander verbunden. Die so stoffschlüssig gefügten Überkreuzungsstellen sind hierbei innerhalb von drei oder mehr als drei streifenförmigen, treffstellenfrelen Gewebebereichen angeordnet, die sich über die gesamte Breite des Flachgewebebands erstrecken und zwischen sich jeweils einen Treffstellen aufweisenden Gewebebereich abgrenzen. Unter dem Begriff "transparent" ist in dieser Schrift zu verstehen, dass ein für Licht aus einem bestimmten Wellenlängenbereich transparentes Medium dieses Licht nicht oder in so einem geringen Umfang absorbiert, beispielsweise maximal 10%, dass es zu keiner Erweichung des Mediums kommt.

Ein Endlosgewebeband mit entsprechend ausgeführter stabilisierter Webnaht ermöglicht eine Umleitung von auf die Treffstelle eines Kett- bzw. Maschinenrichtungsfadens wirkender Kräfte mittels der stoffschlüssig verbundenen Gamüberkreuzungen vor und hinter der Treffstelle auf benachbarte Kett- bzw. Maschinenrichtungsfäden. Diese Kraftumleitung wird durch die Verteilung der Treffstellen auf mindestens zwei Gewebebereiche verbessert, da hierdurch gewährleistet ist, dass jeder der treffstellenhaltigen Gewebebereiche auch von Kett- bzw. Maschinenrichtungsfäden durchzogen wird, die in diesem Bereich keine Treffstelle aufweisen. Die Verteilung der zur Kraftumleitung ausgebildeten stoffschlüssig verbundenen Gamüberkreuzungen auf mehrere Bereiche verkürzt die maximale Breite eines durch den Stoffschluss versteiften Gewebebereichs und resultiert somit in einer flexibleren Ausführung des Webnahtbereichs.

Bei einer Treffstelle handelt es sich um eine Stelle, an der zwei entlang einer geraden Linie aufeinander zu verlaufende Enden unterschiedlicher Kett- bzw. Maschinenrichtungsfäden oder ein und desselben Kett- bzw. Maschinenrichtungsfadens angeordnet sind.

Handelt es sich um zwei aufeinander zulaufende Enden unterschiedlicher Kett- bzw. Maschinenrichtungsfäden, so kann es sich bei den auf der geraden Linien aufeinander zu laufenden Kett- bzw. Maschinenrichtungsfäden um solche handelt, die im Gewebe um maximal fünf, bevorzugt maximal einen Schuss- bzw. Maschinenquerrichtungsfadenrapport, besonders bevorzugt um maximal zwei Kett- bzw. Maschinenrichtungsfäden zueinander versetzt sind. Im Ergebnis verlaufen dann die Kett- bzw. Maschinenrichtungsfäden des genahteten Gewebes mit einem Winkel zur Maschinenrichtung des Gewebes.

Es sind verschiedene Möglichkeiten der Ausbildung einer Treffstelle denkbar. So ist es denkbar, dass die Enden an der Treffstelle aufeinander treffen und mit keinem Schuss-oder Maschinenquerrichtungsfaden gemeinsam verwoben sind oder mit einem oder mehreren Schussfäden gemeinsam verwoben sind. Im erst genannten Fall treffen sich die Webpfade der beiden aufeinander zulaufenden Kettfadenenden. Im zweit genannten Fall überlappen sich die Webpfade der beiden Kett- bzw. Maschinenrichtungsfadenenden. In beiden oben genannten Fällen können sich die Enden berühren.

Denkbar Ist auch, dass die beiden aufeinander zulaufenden Enden In Maschinenrichtung betrachtet zueinander beabstandet enden, wodurch an der Treffstelle ein, maximal zwei Schussfäden angeordnet sind, die mit keinem der beiden Enden verwoben sind. Im letzt genannten Fall enden die Webpfade der beiden aufeinander zulaufenden Enden ein oder maximal zwei Schuss- bzw. Maschinenquerrichtungsfäden voneinander beabstandet zueinander.

Die Treffstelle kann sich In Maschinenrichtung betrachtet erstrecken von dem letzten Schuss- bzw. Maschinenrichtungsfaden mit dem das eine der beiden Enden abbindet, bevor dieses aus dem Gewebe geführt wird, bis zum letzten Schuss- bzw. Maschinenrichtungsfaden mit dem das andere der beiden Enden abbindet, bevor dieses aus dem Gewebe geführt wird.

Das erfindungsgemäße Verfahren zum Ausbilden von Flachgewebebändern mit einer entsprechend stabilisierten Webnaht umfasst folgende Schritte: Bereitstellen eines Flachgewebebands aus Garnen thermoplastischen Materials, dessen Kett- bzw. Maschinenrichtungsfäden und/oder Schuss- bzw. Maschinenquerrichtungsfäden für Licht einer Wellenlänge aus einem Bereich im nahen Infrarot transparent sind, und an dessen Enden Kett- bzw. Maschinenrichtungsfäden zum Ausbilden einer Webnaht freigelegt sind; Ausbilden der Webnaht zum Verbinden der Enden des Flachgewebebands zu einem Endlosgewebeband; Einbringen eines das Licht aus dem Wellenlängenbereich im nahen Infrarot absorbierenden Materials in den Garnkontaktbereich von Überkreuzungen der Kett- bzw. Maschinenrichtungsfäden mit Schuss- bzw. Maschinenquerrichtungsfäden, falls weder Kett- bzw. Maschinenrichtungsfäden noch Schuss- bzw. Maschinenquerrichtungsfäden das Licht aus dem Wellenlängenbereich im nahen Infrarot absorbieren, wobei das absorbierende Material wenigstens in Garnüberkreuzungen eingebracht wird, die innerhalb von drei oder mehr als drei streifenförmigen, treffstellenfreien Gewebebereichen angeordnet sind, die sich über die gesamte Breite des Flachgewebebands erstrecken und zwischen sich jeweils einen Treffstellen aufweisenden Gewebebereich abgrenzen; und Bestrahlen von wenigstens der drei oder mehr als drei streifenförmigen treffstellenfreien Gewebebereiche mit Licht aus dem Wellenlängenbereich im nahen Infrarot zum Aufschmelzen der Garne an absorbierenden Bereichen.

Unter nahem Infrarotbereich ist ein Wellenlängenbereich von 700 bis 1200 nm gemeint, so dass zum stoffschlüssigen Verbinden der Garnübergänge herkömmliche NIR-Transmissionslaserschweißvorrichtungen und -verfahren verwendet werden können, beispielsweise unter Verwendung von Diodenlasern mit Emissionswellenlängen im Bereich von 808 bis 980 nm, von Nd:YAG-Laser mit einer Emissionswellenlänge von 1064 nm oder von Infrarotstrahlern.

Zum Sicherstellen einer effektiven Umleitung von auf eine Treffstelle wirkender Kräfte ist wenigstens einer der Gewebebereiche mit stoffschlüssig gefügten Überkreuzungsstellen von Kett- bzw. Maschinenrichtungsfäden und Schuss- bzw. Maschinenquerrichtungsfäden innerhalb einer die Enden eines Flachgewebebands zum Endlosflachgewebeband verbindenden Webnaht angeordnet.

Vorzugsweise bei Ausbildung einer im Vergleich zur Länge der Webnaht größeren Anzahl von treffstellenhaltigen Gewebebereichen, können eine oder zwei der stoffschlüssig gefügte Überkreuzungsstellen enthaltenden Gewebebereiche wenigstens teilweise in das Vollgewebe außerhalb der Webnaht reichen.

Bei Ausführungsformen mit für das Licht einer Wellenlänge aus dem Bereich im nahen Infrarot transparenten Kett- bzw. Maschinenrichtungsfäden und Schuss- bzw. Maschinenquerrichtungsfäden, sind die stoffschlüssigen Verbindungen an den jeweiligen Garnüberkreuzungsstellen mittels Absorption von Licht einer Wellenlänge aus dem Bereich im nahen Infrarot durch ein an den Überkreuzungen zwischen Kett- bzw. Maschinenrichtungsfäden und Schuss- bzw. Maschinenquerrichtungsfäden angeordnetes entsprechendes Licht absorbierendes Material bewirkt, wodurch ein die Polymerstruktur der Garne schonendes, selektives Aufschmelzen der Garnüberkreuzungen erzielt werden kann.

Alternative Ausführungsformen weisen Licht einer Wellenlänge aus dem Bereich im nahen Infrarot absorbierende Kett- bzw. Maschinenrichtungsfäden und für Licht aus diesem Bereich transparente Schuss- bzw. Maschinenquerrichtungsfäden auf, wobei die stoffschlüssige Verbindung an Überkreuzungsstellen beider Garne mittels Absorption von Licht einer Wellenlänge aus dem Bereich im nahen Infrarot durch die Kett- bzw. Maschinenrichtungsfäden bewirkt ist. Da bei dieser Ausführung nur die Garnüberkreuzungen stoffschlüssig verbunden sind, bei denen der das Licht absorbierende Kett- bzw. Maschinenrichtungsfaden durch den transparente Schuss- bzw. Maschinenquerrichtungsfaden hindurch bestrahlt wurde, ist bei einigen solcher Ausführungsformen nur ein Teil der Garnüberkreuzungen stoffschlüssig verbunden. In der Folge ist die Versteifung des Gewebes geringer als bei stoffschlüssiger Verbindung aller Überkreuzungen wodurch man eine höhere Flexibilität des Gewebes im Schweißbereich erhält, d. h. im Bereich mit stoffschlüssig verbundenen Garnüberkreuzungen.

Bei einer weiterhin vorteilhaften Ausführungsform sind die Schuss- bzw. Maschinenquerrichtungsfäden zumindest im Webnahtbereich so ausgebildet, dass sie Licht einer Wellenlänge aus dem Bereich im nahen Infrarot absorbieren, wobei die Kett- bzw. Maschinenrichtungsfäden für Licht aus diesem Bereich transparent sind. Die stoffschlüssige Verbindung der Garne an Überkreuzungsstellen wird hierbei mittels Absorption von Licht einer Wellenlänge aus dem Bereich im nahen Infrarot durch die Schuss- bzw. Maschinenquerrichtungsfäden bewirkt. Bei dieser Ausführungsform wird der Einsatz von Schweißlicht absorbierenden Garnen auf den Webnaht- oder einen eventuell etwas ausgedehnteren Schweißbereich beschränkt, so dass der Einsatz verhältnismäßig teurerer absorbierender Garne reduziert werden kann. Da auch hier nur jede zweite Garnüberkreuzung stoffschlüssig fixiert wird, bietet diese Ausführungsform eine vergleichsweise höhere Flexibilität.

Um bei Kombination von absorbierenden Fäden mit diese überkreuzenden transparenten Fäden alle Garnüberkreuzungen stoffschlüssig zu verbinden, wird das Schweißlicht von beiden Seiten in das Gewebe eingestrahlt.

Bei Ausführungsformen des Verfahrens umfasst das Einbringen eines das Licht aus dem Wellenlängenbereich im nahen Infrarot absorbierenden Materials in den Garnkontaktbereich von Überkreuzungen der Kett- bzw. Maschinenrichtungsfäden mit Schuss- bzw. Maschinenquerrichtungsfäden vorteilhaft einen Schritt zum Aufbringen des in einem Lösungsmittel gelösten absorbierenden Materials auf zumindest den oder die Gewebebereiche, in denen eine stoffschlüssige Verbindung von Garnüberkreuzungen vorgesehen ist, und zum Verdampfen des Lösungsmittels.

Bei weiteren Ausführungsformen des Verfahrens umfasst das Einbringen eines das Licht aus dem Wellenlängenbereich im nahen Infrarot absorbierenden Materials in den Garnkontaktbereich von Überkreuzungen der Kett- bzw. Maschinenrichtungsfäden mit Schuss- bzw. Maschinenquerrichtungsfäden vorteilhaft einen Schritt zum Beschichten der Kett- bzw. Maschinenrichtungsfäden des Flachgewebebands im Bereich der Enden mit einem das Licht absorbierenden Material vor dem Ausbilden der Webnaht. Hierdurch ist eine auf den Webnahtbereich beschränkte einfache Beschichtung der Kett- bzw. Maschinenrichtungsfäden möglich, die in Kombination mit nicht beschichteten Schuss- bzw. Maschinenquerrichtungsgarnen die Ausbildung flexiblerer verschweißter Gewebebereiche, oder in Verbindung mit beschichteten Schuss- bzw. Maschinenquerrichtungsgarnen die Ausbildung vollfester Schweißbereiche ermöglicht.

Zum selektiven Aufschmelzen der Garne an den Garnkontaktbereichen bzw. -stellen der Überkreuzungen von Kett- bzw. Maschinenrichtungs- und Schuss- bzw. Maschinenquerrichtungsfäden wird das absorbierende Material, falls erforderlich, bei vorteilhaften Ausführungsformen außerhalb der Garnkontaktstellen an den Überkreuzungen von Kett- bzw. Maschinenrichtungsfäden und Schuss- bzw. Maschinenquerrichtungsfäden durch Spülen, Wischen oder Bürsten entfernt.

Zum Erzielen einer erhöhten Reißfestigkeit der Webnaht werden bei bevorzugten Ausführungsformen zu deren Ausbildung die zwischen zwei treffstellenfreien Gewebebereichen mit stoffschlüssig verbundenen Garnüberkreuzungen angeordneten Treffstellen in Bezug auf die Richtung der Kett- bzw. Maschinenrichtungsfäden an mehreren voneinander verschiedenen Stellen angeordnet.

Weitere Merkmale der Erfindung ergeben sich aus der nachfolgenden Beschreibung von Ausführungsbeispielen in Verbindung mit den Ansprüchen sowie den Figuren. Bei der nachfolgenden Erläuterung einiger Ausführungsbeispiele der Erfindung wird auf die beiliegenden Figuren Bezug genommen, von denen
- Figur 1: ein zur Webnahtverbindung vorbereitetes Flachgewebeband in einer schematisierten Darstellung zeigt,
- Figur 2: ein mit einer Webnahtverbindung geschlossenes Endlosflachgewebeband in einer schematisierten Darstellung zeigt,
- Figur 3a: eine Vorrichtung zum Transmissionsverschweißen von Garnüberkreuzungen im Bereich der Webnaht eines Endlosflachgewebebands in einer schematisierten Darstellung veranschaulicht,
- Figur 3b: eine andere Vorrichtung zum Transmissionsverschweißen von Garnüberkreuzungen im Bereich der Webnaht eines Endlosflachgewebebands in einer schematisierten Darstellung veranschaulicht,
- Figur 4: eine Ausbildung von stoffschlüssigen Verbindungen bei Verwendung von Schweißlicht absorbierenden Schuss- bzw. Maschinenquerrichtungsgarnen in einer schematisierten Darstellung zeigt,
- Figur 5: eine Ausbildung von stoffschlüssigen Verbindungen bei Verwendung von selektiv zwischen Garnüberkreuzungen eingebrachten, Schweißlicht absorbierenden Materialien in einer schematisierten Darstellung zeigt,
- Figur 6: das Grundprinzip einer mittels Transmissionsschweißen stabilisierten Webnaht geringer Steifigkeit in einer schematisierten Darstellung veranschaulicht, und
- Figur 7: verschiedene Ausbildungen von Treffstellen.

In den Figuren sind Elemente, Komponenten oder Bereiche, die im Wesentlichen gleiche technische Funktionen erfüllen, mit gleichen Bezugszeichen versehen. Verschiedene Ausgestaltungen dieser Elemente, Komponenten oder Bereiche weisen ähnliche Bezugszeichen auf.

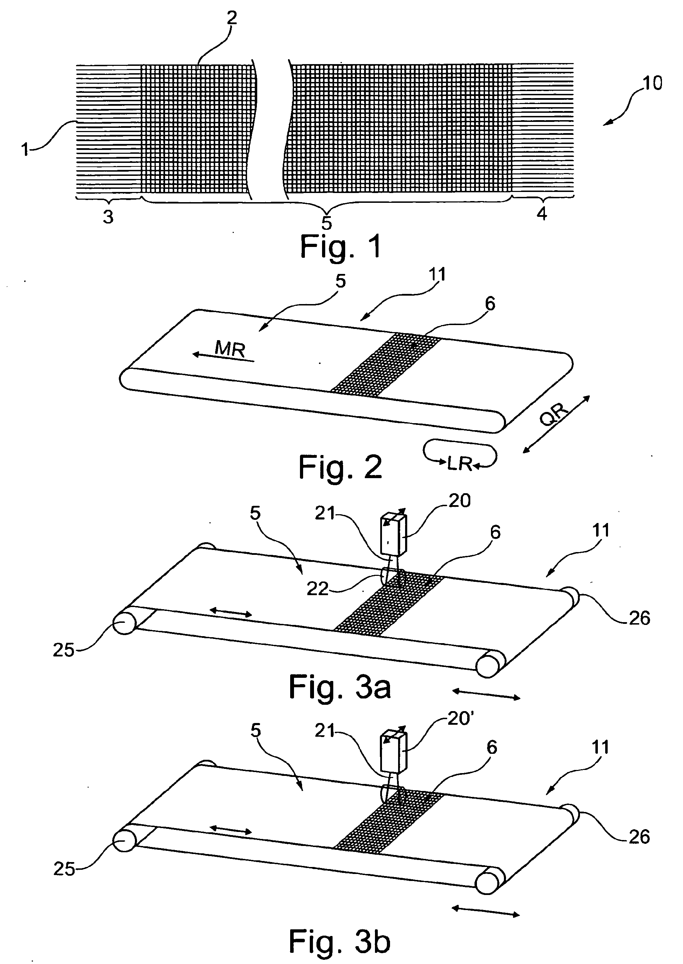

In der schematisierten Darstellung von Figur 1 ist ein auf Länge konfektioniertes Flachgewebeband 10 mit für die Ausbildung einer Webnaht vorbereiteten stirnseitigen Enden 3 und 4 veranschaulicht. Die sich bezogen auf die Darstellung von Figur 1 in horizontaler Richtung erstreckenden Kett- bzw. Maschinenrichtungsfäden 1 des Gewebes 10 kreuzen sich in einem bestimmten Muster mit den in vertikaler Ausrichtung dargestellten Schuss- bzw. Maschinenquerrichtungsfäden 2. Aus Gründen einer übersichtlichen Darstellung sind jeweils nur ein Kett- bzw. Maschinenrichtungs- bzw. Schuss- bzw. Maschinenquerrichtungsfaden mit einem Bezugszeichen versehen. Ferner sind zur besseren Veranschaulichung der Wesensmerkmale des zum Endlosverbinden vorbereiteten Flachgewebebands Abstand und Anzahl von Kett- bzw. Maschinenrichtungs- und Schussfäden, sowie Bindung und Abmessungen des Flachgewebebands 10 ohne Bezugnahme auf konkrete Ausprägungen gewählt.

Zum Fertigen eines Endlosflachgewebebands müssen die Enden 3 und 4 des Flachgewebebands 10 miteinander verbunden werden. Damit die Verbindungsstelle keine im Vergleich zum Rest des Endlosflachgewebebands unterschiedliche Entwässerungscharakteristik aufweist, die zu Markierungen der Faserstoffbahn führen könnte, werden die Enden 3 und 4 unter Ausbildung einer Webnaht miteinander verbunden. In Vorbereitung hierzu wurden aus den Bereichen der beiden Enden 3 und 4, wie in Figur 1 dargestellt ist, die Schuss- bzw. Maschinenquerrichtungsfäden entfernt. Die Enden 3 und 4 weisen somit nur mehr Kett- bzw. Maschinenrichtungsfäden auf. Da aus dem zwischen den beiden Enden 3 und 4 liegenden Bereich 5 keine Fäden und insbesondere auch keine Schuss- bzw. Maschinenquerrichtungsfäden ausgelöst werden, ist in diesem als Vollgewebe bezeichneten Bereich 5 die ursprüngliche Bindung vollständig erhalten.

Wie bereits zuvor erwähnt werden zur Ausbildung der Webnaht die beiden stirnseitigen Enden 3 und 4 des Flachgewebebands 10 in einem quer zur ursprünglichen Webrichtung des Flachgewebebands 10 vorgenommenen Webprozess verbunden. Bei diesem Webnahtprozess werden die an den Enden 3 und 4 aus der Bindung freigemachten Kett- bzw. Maschinenrichtungsfadenenden in eine Schuss- bzw. Maschinenquerrichtungsfadenstruktur mit den Ausmaßen der Webnaht eingewebt. Auch wenn in diesem Webnahtprozess die Schuss- bzw. Maschinenquerrichtungsfäden 2 die Rolle der Kett- bzw. Maschinenrichtungsfäden und die Kett- bzw. Maschinenrichtungsfäden 1 die Rolle der Schuss- bzw. Maschinenquerrichtungsfäden übernehmen, werden in dieser Schrift, um Verwirrungen zu vermeiden, dennoch die auf das ursprüngliche Flachgewebeband 10 bezogenen Bezeichnungen beibehalten.

Die Länge der Webnaht, das heißt ihre Ausdehnung in Laufrichtung des Endlosflachgewebebands 11, ist kleiner als die Summe der beiden Gewebebandenden 3 und 4, so dass sich die Enden eines jeden der Kett- bzw. Maschinenrichtungsfäden in der Webnaht überlagern und damit die Permeabilität der Webnaht für Wasser, Wasserdampf und Luft gegenüber der des Vollgewebes verringen würden. Um diesen Effekt zu vermeiden oder zu verringern, werden die sich überlagernden Teile der Kett- bzw. Maschinenrichtungsfadenenden durch eine Gewebepore oder durch zwei benachbarte Gewebeporen - üblicherweise auf der gleichen Seite des Gewebes - aus der Bindung herausgeführt, wonach die herausstehenden Fadenteile abgeschnitten werden. Je nachdem, wie groß der während des Abschneidens auf die herausstehenden Kett- bzw. Maschinenrichtungsfadenenden ausgeübte Zug ist, berühren sich die Kett- bzw. Maschinenrichtungsfadenenden anschließend innerhalb des Gewebes oder weisen einen geringen Abstand zueinander auf. Bei sehr geringer Zugspannung können die Enden der Kett- bzw. Maschinenrichtungsfäden auch zur Oberfläche des Gewebes umgebogen sein und sich, falls sie durch die selbe Gewebepore nach außen gebogen sind, im Bereich der Biegung berühren. Werden die Enden eines Kett- bzw. Maschinenrichtungsfadens durch verschiedene Gewebeporen geführt, so kann dies je nach Lage der Poren auch zu einem Interlock führen. Der Bereich, in dem die Enden eines Kett- bzw. Maschinenrichtungsfadens angeordnet sind, wird als Treffstelle bezeichnet.

Das Ergebnis des Webnahtprozesses ist ein Endlosflachgewebeband 11 mit einer Webnaht 6, wie es in der stark schematisierten Darstellung von Figur 2 veranschaulicht ist. Auf eine Illustrierung der Bindung im Vollgewebebereich 5 wurde bei dieser Darstellung zugunsten eines Hervorhebens der Webnaht 6 verzichtet. In Figur 2 sind ferner die in dieser Schrift verwendeten Richtungsbezeichnungen angedeutet, das sind die Laufrichtung LR des Endlosflachgewebebands 11 bei bestimmungsgemäßem Gebrauch in einer Maschine zur Papierherstellung, die quer hierzu orientierte Querrichtung QR des Bandes 11 und die Maschinenrichtung MR, die die Transportrichtung einer Faserstoffbahn auf dem Endlosflachgewebeband 11 in einer Papiermaschine wiedergibt.

Aufgrund der Unterbrechung der Kett- bzw. Maschinenrichtungsfäden an den Treffstellen, können über die Treffstellen keine Kräfte geleitet werden. Jede Zugbelastung des Endlosgewebebands 11 führt somit immer dann zu einem Öffnen bzw. Erweitern der Trennstellen, wenn die auf die Treffstelle einwirkenden Zugkräfte nicht an andere Fäden des Gewebes übertragen werden können. In einer Webnaht ist eine solche Kraftübertragung an andere Garne an den Überkreuzungen des Kett- bzw. Maschinenrichtungsfadens mit zur Treffstelle benachbarten Schuss- bzw. Maschinenquerrichtungsfäden möglich. Da die Kraftübertragung jedoch durch die Haftreibung der Garne an den Überkreuzungen limitiert ist, bilden die Treffstellen somit eine Schwachstelle der Webnaht. Zum Vermeiden einer die mechanische Belastbarkeit der Webnaht 6 mindernden Konzentration solcher Schwachstellen werden die Treffstellen üblicherweise gleichmäßig über die Webnaht verteilt.

Zur Verbesserung der Kraftüberleitung auf benachbarte Garne können Garnüberkreuzungen im Webnahtbereich 6 miteinander stoffschlüssig verbunden werden. Um gleichmäßig in einer Webnaht verteilte Treffstellen durch stoffschlüssiges Verbinden benachbarter Garnüberkreuzungen zu stabilisieren, muss sich ein entsprechendes Verbinden von Garnüberkreuzungen über die gesamte Fläche der Webnaht erstrecken. An den stoffschlüssig verbundenen Garnüberkreuzungen können sich die Fäden nicht mehr relativ zueinander verschieben wodurch die Webnaht versteift wird. Durch die Versteifung wirken während des Umlaufs des Endlosgewebebands 11 in einer Papiermaschine auf die Webnaht 6 höhere Biegekräfte ein als auf das Vollgewebe 5, wodurch das Band 11 insbesondere an den Übergängen der plattenförmig versteiften Webnaht 6 zum flexibleren Vollgewebe 5 stark belastet wird.

Um die Webnaht 6 mittels stoffschlüssigem Verbinden von Garnüberkreuzungen zu stabilisieren und trotzdem flexibel zu gestalten, werden die Treffstellen innerhalb bestimmter Teilbereiche der Webnaht angeordnet und der stoffschlüssige Verbund von Garnüberkreuzungen wird in davon verschiedenen Teilbereichen der Webnaht oder im benachbarten Vollgewebe vorgenommen.

Die Stabilisierung der Webnahtverbindung durch stoffschlüssiges Verbinden der Garnüberkreuzungen wird mithilfe eines wie zuvor erläuterten Transmissionsschweißverfahrens vorgenommen. Hierzu wird das Endlosflachgewebeband 11 zunächst, beispielsweise mittels zweier Walzen 25 und 26, wie in den Figuren 3a und 3b veranschaulicht ist, gespannt, wobei zum Spannen der Webnaht 6 wenigstens eine der beiden Walzen wie in der Figur angedeutet verschiebbar gelagert ist. Selbstverständlich kann die Vorrichtung noch weitere Walzen enthalten, mithilfe derer das Band 11 mehrmals umgelenkt werden kann, um so eine kürzere Bauform der Anlage zu erhalten. Andere geeignete Vorrichtungen weisen eine Spannvorrichtung auf, bei der nur ein die Webnaht 6 umfassender Teilbereich des Endlosflachgewebebands 11 gespannt wird, beispielsweise mithilfe von Klemmzangen.

Zum Verschweißen von Kett- bzw. Maschinenrichtungs- und Schuss- bzw. Maschinenquerrichtungsfäden an den Überkreuzungsstellen wird ein von einem Im nahen Infrarot emittierenden Laser 20 oder einem Infrarotstrahler abgestrahltes Licht 21 auf die zu verschweißenden Überkreuzungen von Kett- bzw. Maschinenrichtungs- und Schuss- bzw. Maschinenquerrichtungsfäden geführt. Als Laser eignen sich beispielsweise. Diodenlaser mit Emissionswellenlängen im Bereich von 808 bis 980 nm und Nd:YAG-Laser mit einer Emissionswellenlänge von 1064 nm. Es werden Laser oder Infrarotstrahler mit Emissionen aus dem Bereich von etwa 700 bis 1200 nm verwendet, da Licht in diesem Wellenlängenbereich von den Garnen des Gewebes nicht bzw. nicht einem, ein Aufheizen der Garne bewirkenden Maße absorbiert wird.

In der in Figur 3a veranschaulichten Vorrichtung wird das Laserlicht 21 von der Laserquelle 20 fächerförmig abgestrahlt und durch eine für das verwendete Licht durchsichtige Walze 22 linienförmig auf die Kontaktfläche zwischen Walze 22 und Webnaht 6 konvergiert. Der fächerförmige Lichtstrahl kann sowohl durch schnelles Ablenken des Laserlichts als auch statisch mittels geeigneter Optiken erzeugt werden. Die mittels der Walze 22 linienförmig konzentrierte Laserenergie wird von im Bestrahlungsbereich angeordneten, das Licht absorbierenden Stoffen in thermische Energie umgewandelt, die schließlich zu einem Aufschmelzen der Garne im Bereich der absorbierenden Stoffe führt. Der von der Walze 22 auf das Gewebe ausgeübte Druck begünstigt den Stoffschluss zwischen sich an einer Aufschmelzzone berührenden Garnen.

in der in Figur 3b veranschaulichten Vorrichtung wird das vom Schweißkopf 20' fächerförmig abgestrahlte Schweißlicht 21 (entweder Laserlicht oder Licht eines geeigneten Infrarotstrahlers) direkt auf die Webnaht gerichtet. Die Vorrichtung weist somit keine für das Schweißlicht durchsichtige Walze im Bestrahlungsgang auf. Bei dieser Vorrichtung wird der durch die Fadenführung bewirkte Kontaktdruck zwischen den Garnen an deren Überkreuzungen zur Begünstigung eines Stoffschlusses genutzt. Der Kontaktdruck kann durch Spannen des Endlosflachgewebebands 11, beispielsweise mithilfe der beiden 25 und 26, verstärkt werden.

Im Falle von wie in den Figuren Figur 3a und 3b veranschaulichten Vorrichtungen genügt zum Bestrahlen beliebig wählbarer Teilflächen der Webnaht eine Verfahrbarkeit von Laserkopf 20 (bzw. anderer geeigneter Lichtquelle) und Walze 22 bzw. von Schweißkopf 20' quer zur Laufrichtung LR des Endlosflachgewebebands 11, da ein Verschieben des Schweißlichts 21 in Laufrichtung der Webnaht 6 mittels Rotation der Walzen 25 und 26 vorgenommen werden kann. Ist das Endlosflachgewebeband 11 jedoch nicht ortsveränderbar eingespannt, so können Laserkopf 20 und Walze 22 bzw. Schweißkopf 20' auch in Laufrichtung der Webnaht versetzbar angeordnet sein.

Zum Verschweißen von Garnüberkreuzungen im Webnahtbereich 6 muss das eingestrahlte Licht zwischen den sich an den Überkreuzungen berührenden Garnen absorbiert werden. Hierzu kann entweder einer der sich überkreuzenden Fäden so ausgebildet sein, dass er das zum Verschweißen benutzte Licht absorbiert, oder ein geeigneter Absorber wird an den Überkreuzungsstellen zwischen die Garne eingebracht.

Licht im nahen Infrarotbereich absorbierende Garne können z. B. durch Einbringen von Kohlenstoff, beispielsweise in Form von Ruß, Graphit oder Kohlenstoffnanoröhren, in das thermoplastische Grundmaterial hergestellt werden. Absorberlösungen zum Aufbringen auf die Verschweißungsstellen werden beispielsweise von der Firma Clearweld angeboten. Es können jedoch auch geeignet Farbstoffe verwendet werden, die in einem Lösungsmittel gelöst auf die Garne aufgebracht werden.

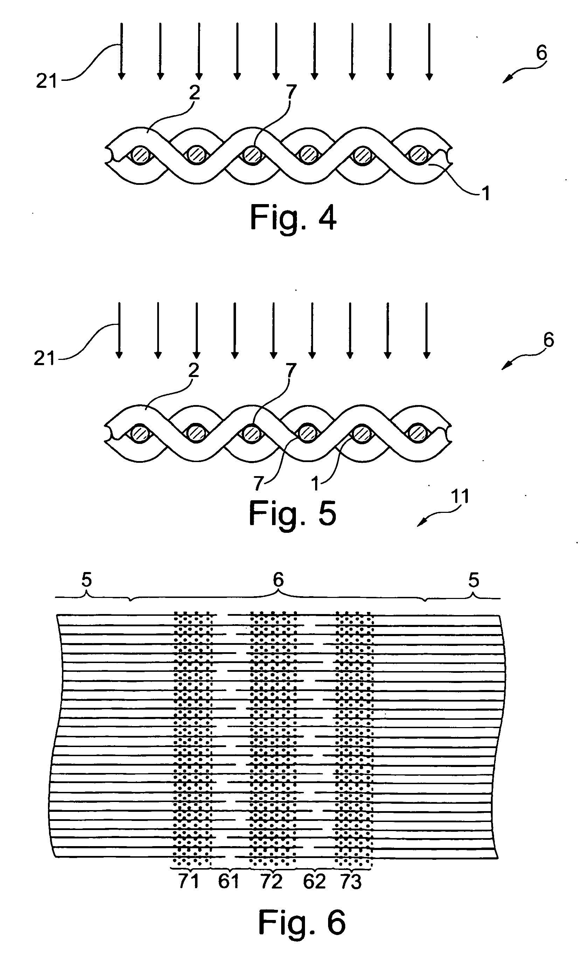

Bei Einsatz von das Schweißlicht 21 absorbierenden Garnen werden diese, damit ein Teil der Garnüberkreuzungen verschweißt werden kann, vorzugsweise entweder als Schuss- bzw. Maschinenquerrichtungsfäden im Webnahtbereich oder als Kett- bzw. Maschinenrichtungsfäden des Endlosflachgewebebands verwendet. Der erste Fall ist in Figur 4 veranschaulicht, worin ein in Querrichtung QR des Bandes 11 verlaufender Schnitt durch einen Teil der Webnaht 6 dargestellt ist. Die Figur zeigt zwei hintereinander angeordnete Schuss- bzw. Maschinenquerrichtungsfäden 2, die im Querschnitt dargestellte Kett- bzw. Maschinenrichtungsfäden 1 überkreuzen. Die Schuss- bzw. Maschinenquerrichtungsfäden 2 absorbieren von oben auf das Gewebe eingestrahltes Schweißlicht 21, die Kett- bzw. Maschinenrichtungsfäden sind für dieses Licht transparent. Das Schweißlicht 21 erreicht somit keine Garnüberkreuzung, die in Bezug auf die Lichteinstrahlung von einem Schuss- bzw. Maschinenquerrichtungsfaden abgedeckt ist, so dass diese Garnüberkreuzungen vom Schweißlicht nicht aufgeschmolzen werden. An den anderen Überkreuzungsstellen, an denen die für das eingestrahlte Schweißlicht 21 transparenten Kett- bzw. Maschinenrichtungsfäden oberhalb der Schweißlicht 21 absorbierenden Schuss- bzw. Maschinenquerrichtungsfäden liegen, erreicht das Schweißlicht 21 den Kontaktbereich zwischen den Garnen und kann den Schuss- bzw. Maschinenquerrichtungsfaden dort so aufheizen, dass an dieser Stelle eine stoffschlüssige Verbindung 7 der beiden Garne herbeigeführt wird.

Um wie in Figur 5 veranschaulicht alle Garnüberkreuzungen im Schweißbereich stoffschlüssig miteinander verbinden zu können, wird der Schweißbereich entweder von beiden Seiten des Gewebes mit Schweißlicht bestrahlt, oder es werden im Schweißbereich ausschließlich für das Schweißlicht 21 transparente Garne verwendet. Ein (in der Figur nicht dargestelltes) Schweißlicht 21 absorbierendes Material wird zwischen die Garne an den Überkreuzungsstellen von Kett- bzw. Maschinenrichtungs- und Schuss- bzw. Maschinenquerrichtungsfäden eingebracht. Durch einen entsprechenden selektiven Absorberauftrag kann das Schweißlicht 21 alle Garne durchdringen und wird ausschließlich vom zwischen den Überkreuzungen angeordneten Absorbermaterial absorbiert, das sich in der Folge aufheizt und zu einem Aufschmelzen der es umgebenden Garnbereiche führt. Das Aufschmelzen sich berührender Garnbereiche führt schließlich zur Herstellung des Stoffschlusses 7.

Das selektive Einbringen von Absorbermaterial in die Überkreuzungsbereiche der Garne kann auf unterschiedliche Weise erfolgen. In einer bevorzugten Ausführungsform werden Absorberlösungen verwendet, die sich beim Verdampfen des Lösungsmittelanteils zusammenziehen ohne Absorberrückstände auf den nicht mehr benetzten Oberflächen zu hinterlassen. Entsprechende Absorberlösungen werden von der Firma Clearweld in den Handel gebracht. Aufgrund der mit der Benetzung der Garne verbundenen Kapillarwirkung zieht sich die Absorberlösung beim Abdampfen des Lösungsmittels zu den Garnüberkreuzungsstellen zurück und reichert das absorbierende Material dort zwischen den Garnen an.

Bei Absorberlösungen, die beim Abdampfen des Lösungsmittelanteils das absorbierende Material auf den Garnoberflächen zurücklassen, wie z. B. Tinten, wird eine andere vorteilhaften Ausführungsform des selektiven Absorberauftrags bevorzugt, bei der die Kett- bzw. Maschinenrichtungsfäden in den Endbereichen 3 und 4 des Gewebebands 10 vor Beginn des Webnahtprozesses mit einem Absorbermaterial beschichtet werden, beispielsweise durch Eintauchen der freigelegten Kett- bzw. Maschinenrichtungsfäden in eine entsprechende Absorberlösung und anschließendes Trocknen der Fäden. Die zur Ausbildung der Webnaht verwendeten Schuss- bzw. Maschinenquerrichtungsfäden können, müssen jedoch nicht mit einem Absorbermaterial beschichtet sein. Bei hierzu alternativen Ausführungsformen wird die Webnaht nach Fertigstellung mit einer Absorberlösung getränkt, beispielsweise in einem Tauchbad oder mittels Aufsprühen der Lösung. Die hierbei erzielte Beschichtungsdicke sollte so dünn sein, dass die Gewebeporen nicht verstopft werden. Bevorzugt werden Beschichtungsdicken bis maximal 60 µm, insbesondere bis maximal 30 µm und ganz besonders bis maximal 20µm.

Nach Fertigstellung der absorberbeschichteten Webnaht wird außerhalb der Überkreuzungsbereiche befindliches Absorbermaterial entfernt. Dies kann durch mechanischen Abtrag wie z. B. Bürsten oder Abwischen mit einem Tuch oder ähnlichem geschehen, vorzugsweise wird der beschichtete Teil des Gewebes jedoch mit einem das Absorbermaterial lösenden Mittel behandelt, beispielsweise einer Mischung aus Tetrahydrofuran (THF) (75%) und Wasser (25%). Damit das Lösungsmittel nicht in die Überkreuzungsbereiche der Garne eindringen kann, wird das Gewebeband 11 im behandelten Bereich unter Zugspannung gesetzt, so dass sich der Kontaktdruck zwischen den Garnen an den Überkreuzungsstellen erhöht. Zum Abtragen des überschüssigen Absorbermaterials kann das Gewebe mit dem Lösungsmittel gespült werden. Der Abtrag kann aber auch durch Wischen mit einem in Lösungsmittel getränkten Tuch oder mithilfe einer Bürste erfolgen.

Nach dem selektiven Absorberauftrag werden die Garne in ausgewählten Bereichen der Webnaht und eventuell des Vollgewebes an ihren Überkreuzungsstellen stoffschlüssig miteinander verbunden. Falls statt einer Absorberbeschichtung von Garnüberkreuzungen wie oben beschriebene Schweißlicht 21 absorbierende Garne verwendet werden, wird auch in diesem Fall das Verschweißen von Überkreuzungsstellen nur in ausgewählten Bereichen der Webnaht bzw. auch des Vollgewebes vorgenommen. Falls auch Garnüberkreuzungen in Bereichen des Vollgewebes verschweißt werden, so wird auch in diesen Bereichen eine Absorption des Schweißlichts 21 an den jeweiligen Überkreuzungsstellen sichergestellt.

Die ausgewählten Bereiche enthalten keine Treffstellen und sind so auf dem Endlosgewebeband 11 angeordnet, dass jeder Treffstellen enthaltende Bereich des Bands 11 jeweils zwischen zwei ausgewählten, treffstellenfreien Bereichen angeordnet ist. Das Grundprinzip dieser Anordnung ist in Figur 6 veranschaulicht. Das im Bereich der Webnaht 6 schematisiert dargestellte Endlosgewebeband 11 weist zwei treffstellenhaltige Bereiche 61 und 62 auf, die zwischen treffstellenfreien Bereichen 71, 72, und 73 (in Figur 6 als punktierte Bereiche angedeutet) mit verschweißten Garnüberkreuzungen angeordnet sind. Aus Gründen einer übersichtlichen Darstellung sind in der Figur lediglich Kett- bzw. Maschinenrichtungsfäden, die im Gewebe selbstverständlich vorhandenen Schuss- bzw. Maschinenquerrichtungsfäden jedoch nicht dargestellt. Anzahl, Stärke und Abstand der veranschaulichten Kett- bzw. Maschinenrichtungsfäden sind der Darstellung des Grundprinzips geschuldet und orientieren sich nicht an realen Geweben. Ferner sind die Abstände der Kett- bzw. Maschinenrichtungsfäden an den Trennstellen zur besseren Erkennbarkeit übertrieben groß veranschaulicht.

Vorzugsweise befindet sich die Treffstelle eines Kett- bzw. Maschinenrichtungsfadens 1 stets in einem Bereich, der von dem oder den Bereichen verschieden ist, in dem oder denen die Treffstellen der diesem Kett- bzw. Maschinenrichtungsfaden benachbarten Kett- bzw. Maschinenrichtungsfäden angeordnet sind. Hierdurch wird sichergestellt, dass eine auf den Kett- bzw. Maschinenrichtungsfaden im Bereich seiner Treffstelle einwirkende Zugkraft an den die Treffstelle umgebenden Schweißbereichen auf die benachbarten Kett- bzw. Maschinenrichtungsfäden umgeleitet und aufgenommen wird. Bei Verwendung von wie in Figur 6 gezeigt zwei treffstellenhaltigen Bereichen 61 und 62 befinden sich die Treffstellen der Kett- bzw. Maschinenrichtungsfäden somit abwechselnd in dem einen oder anderen treffstellenhaltigen Bereich, so dass an jedem der treffstellenhaltigen Bereiche 61 und 62 die auf das Band 11 wirkenden Zugkräfte jeweils von der Hälfte aller Kett- bzw. Maschinenrichtungsfäden aufgenommen werden.

Damit die treffstellenhaltigen Bereiche größere Zugkräfte aufnehmen können, müssen mehr als zwei, beispielsweise drei, vier oder mehr, solcher Bereiche auf der Webnaht angeordnet werden, wobei auch hier wieder die Treffstellen benachbarter Kett- bzw. Maschinenrichtungsfäden in verschiedenen treffstellenhaltigen Bereichen angeordnet sind und zwar vorzugsweise so, dass jede der Anzahl der treffstellenhaltigen Bereiche entsprechende Anzahl benachbarter Kett- bzw. Maschinenrichtungsfäden ihre Treffstellen auf alle diese Bereiche verteilt angeordnet haben. Bei drei entsprechend angeordneten treffstellenhaltigen Bereichen wird die mechanische Belastung an jedem dieser Bereiche somit von zwei Drittel der Kett- bzw. Maschinenrichtungsfäden aufgenommen, bei vier von drei Viertel der Kett- bzw. Maschinenrichtungsfäden und so fort. Sollte bei einer Vielzahl von treffstellenhaltigen Bereichen die Webnaht 6 zu kurz sein, um die außen gelegenen treffstellenfreien Bereiche mit verschweißten Garnüberkreuzungen aufzunehmen, so können diese auch ganz oder teilweise im Vollgewebe 5 angeordnet sein.

Eine konkrete Ausführungsform einer wie beschrieben ausgeführten flexiblen Webnaht 6 weist bei einer Länge der Webnaht von 300 mm zwei treffstellenhaltige Bereiche 61 und 62 auf, die sich in Querrichtung QR des Endlosbands 11 über die gesamte Breite der Webnaht 6 erstrecken und in Längsrichtung LR des Endlosbands 11 eine Breite von 60 mm aufweisen. Vorzugsweise sind innerhalb eines jeden der treffstellenhaltigen Bereiche 61 und 62 die Treffstellen nach einem Muster in Laufrichtung LR relativ zueinander versetzt angeordnet. Zwischen den treffstellenhaltigen Bereichen 61 und 62 und außen an diese angrenzend befinden sich treffstellenfreie Bereiche 71, 72 und 73 mit verschweißten Garnüberkreuzungen, die sich ebenfalls über die gesamte Breite der Webnaht 6 erstrecken und in Längsrichtung LR des Endlosbands 11 eine Breite von 60 mm aufweisen. Bei einer solchen Art beträgt die Länge der durch Verschweißen versteiften Bereiche 60 mm im Gegensatz zu 300 mm einer vollverschweißten Webnaht 6. Aufgrund der geringeren Abmessung der verschweißten Bereiche in Umlaufrichtung des Endlosflachgewebebands 11 ist dieses geringeren Biegebelastungen ausgesetzt und somit haltbarer. Durch das Abwechseln von verschweißten Bereichen und unverschweißten Bereichen wird ferner eine zur Stabilisierung der Webnaht ausreichend hohe Anzahl an Garnüberkreuzungen fixiert, ohne eine entsprechende Versteifung des Gewebes zu verursachen. Denn zwischen schmalen versteiften Zonen ist stets eine hochflexible Zone angeordnet.

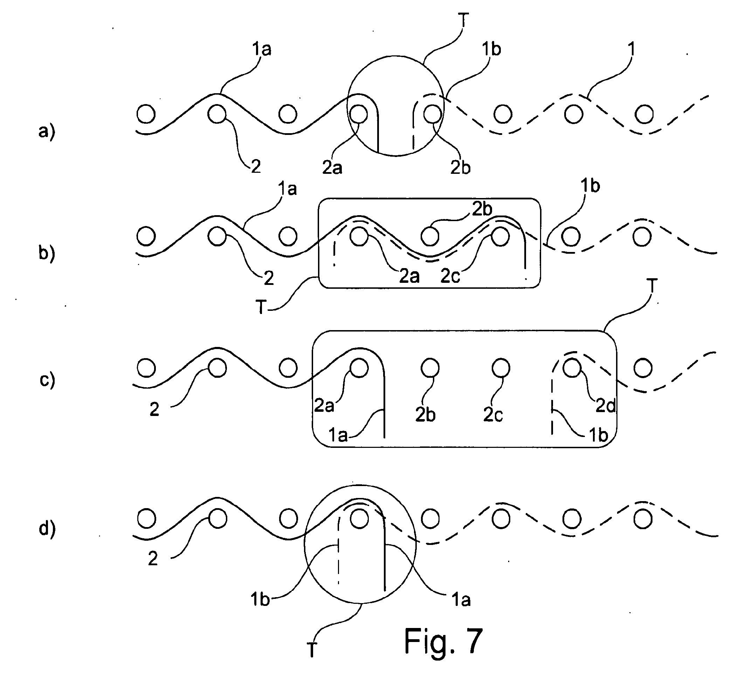

Die Figuren 7a-7d zeigen verschiedene Möglichkeiten der Ausbildung von Treffstellen T.

Die Figur 7a zeigt eine Treffstelle T bei der die beiden aufeinander zulaufenden Enden 1 a und 1 b ein und desselben Kett- bzw. Maschinenrichtungsfadens 1 zu sehen sind. Im vorliegenden Ausführungsbeispiel treffen die Enden 1 a und 1 b aufeinander indem diese über zwei unmittelbar benachbarte Schussfäden 2a und 2b abbinden und zwischen diesen beiden Schussfäden 2a, 2b gemeinsam nach unten aus dem Gewebe geführt werden. Die Treffstelle T erstreckt sich im Maschinenrichtung MD betrachtet von dem Schussfaden 2a bis zum Schussfaden 2b.

Die Figur 7b zeigt eine Treffstelle T bei der die beiden aufeinander zulaufenden Enden 1 a und 1 b ein und desselben Kett- bzw. Maschinenrichtungsfadens 1 zu sehen sind. Im vorliegenden Ausführungsbeispiel treffen die Enden 1 a und 1 b aufeinander, indem diese mit drei unmittelbar benachbarten Schuss- bzw. Maschinenquerrichtungsfäden 2a, 2b und 2c gemeinsam verwoben sind, bevor die Enden 1 a, 1 b aus dem Gewebe geführt werden. Die Treffstelle T erstreckt sich im Maschinenrichtung MD betrachtet von dem Schuss- bzw. Maschinenquerrichtungsfaden 2a bis zum Schuss- bzw. Maschinenquerrichtungsfaden 2c.

Die Figur 7c zeigt eine Treffstelle T bei der die beiden aufeinander zulaufenden Enden 1 a und 1 b ein und desselben Kett- bzw. Maschinenrichtungsfadens 1 zu sehen sind. Im vorliegenden Ausführungsbeispiel werden die beiden Enden 1 a, 1 b in Maschinenrichtung betrachtet um zwei Schuss- bzw. Maschinenquerrichtungsfäden 2a, 2b zueinander beabstandet aus dem Gewebe geführt, wodurch an der Treffstelle T die beiden zwei Schuss- bzw. Maschinenquerrichtungsfäden 2a, 2b angeordnet sind, die mit keinem der beiden Enden 1 a, 1 b verwoben sind. Die Treffstelle T erstreckt sich im Maschinenrichtung MD betrachtet von dem Schuss- bzw. Maschinenquerrichtungsfaden 2a bis zum Schuss- bzw. Maschinenquerrichtungsfaden 2d.

Die Figur 7d zeigt eine Treffstelle T bei der die beiden aufeinander zulaufenden Enden 1 a und 1 b ein und desselben Kett- bzw. Maschinenrichtungsfadens 1 zu sehen sind. Im vorliegenden Ausführungsbeispiel treffen die Enden 1 a und 1 b aufeinander, indem diese mit einem Schuss- bzw. Maschinenquerrichtungsfaden 2a gemeinsam verwoben sind, bevor die Enden 1 a, 1 b aus dem Gewebe geführt werden. Die Treffstelle T ist Maschinenrichtung MD betrachtet auf den Schuss- bzw. Maschinenquerrichtungsfaden 2a beschränkt.

Sämtliche der in den Figuren 7a-7d gezeigten Ausführungen sind für Enden ein und desselben Kett- bzw. Maschinenrichtungsfaden gezeigt. Die obigen Ausführungen gelten aber in gleicher Weise für aufeinander zulaufende Enden unterschiedlicher Kett- bzw. Maschinenrichtungsfäden.

## Patentansprüche

1. Endlosflachgewebeband zum Einsatz in Maschinen für die Papierherstellung, mit sich überkreuzenden Fäden (1, 2), wobei das Endlosgewebeband (11) aus einem Flachgewebeband (10) mit Enden und einer die Enden des Flachgewebebends (10) zum Endlosflachgewebeband (11) verbindenden Webnaht (6) hergestellt ist, wobei wenigstens die Kett- bzw. Maschinenrichtungsfäden (1) oder die Schuss- bzw. Maschinenquerrichtungsfäden (2) von aus einem thermoplastischen Polymer gefertigten Garnen gebildet sind, das für Licht einer Wellenlänge aus einem Wellenlängenbereich von 700 bis 1200 nm transparent ist, und wobei zumindest ein Teil der Garne an Überkreuzungsstellen von Kett- bzw. Maschinenrichtungsfäden (1) und Schuss- bzw. Maschinenquerrichtungsfäden (2) mittels eines am Garnkontaktbereich der Überkreuzungsstellen angeordneten und Licht aus dem Wellenlängenbereich von 700 bis 1200 nm absorbierenden Materials stoffschlüssig miteinander verbunden sind,
**dadurch gekennzeichnet, dass** die so stoffschlüssig gefügten Überkreuzungsstellen innerhalb von drei oder mehr als drei streifenförmigen, treffstellenfreien Gewebebereichen (71, 72, 73) angeordnet sind, die sich über die gesamte Breite des Flachgewebebands (11) erstrecken und zwischen sich jeweils einen Troffstellen aufweisenden Gewebebereich (61, 62) abgrenzen, wobei eine Troffstelle eine Stelle ist, an der zwei entlang einer geraden Linie aufeinander zu verlaufende Enden unterschiedlicher Kett- bzw. Maschinenrichtungsfäden (1) oder ein und desselben Kett- bzw. Maschinenrichtungsfadens (1) angeordnet sind, und i) die beiden aufeinander zu verlaufenden Enden an der Troffstelle aufeinander treffen und mit keinem Schuss-oder Maschinenquerrichtungsfaden gemeinsam verwoben sind oder ii) die beiden aufeinander zulaufenden Enden in Maschinenrichtung zueinander beabstandet enden, wodurch an der Treffstelle ein, maximal zwei Schussfäden angeordnet sind, die mit keinem der beiden Enden verwoben sind oder iii) die beiden aufeinander zulaufenden Enden mit einem oder mehreren Schussfäden gemeinsam verwoben sind, und wobei wenigstens einer der Gewebebereiche (71, 72, 73) mit stoffschlüssig gefügten Überkreuzungsstellen von Kett- bzw. Maschinenrichtungsfäden (1) und Schuss- bzw. Maschinenquerrichtungsfäden (2) innerhalb der die Enden des Flachgewebebands (10) zum Endlosflachgewebeband (11) verbindenden Webnaht (6) angeordnet ist.

2. Endlosflachgewebeband nach Anspruch 1, worin eine oder zwei der stoffschlüssig gefügte Überkreuzungsstellen enthaltenden Gewebebereiche (71, 72, 73) wenigstens teilweise außerhalb der Webnaht (6) in das Vollgewebe (5) reichen, wobei das Vollgewebe (5) aus dem Teil des Flachgewebebands (10) gebildet ist, aus dem zur Herstellung der Webnaht (6) keine Schuss- bzw. Maschinenquerrichtungsfäden (2) ausgelöst wurden.

3. Endlosflachgewebeband nach Anspruch 1 oder 2, worin die Kett- bzw. Maschinenrichtungsfäden (1) und Schuss- bzw. Maschinenquerrichtungsfäden (2) für das Licht einer Wellenlänge aus dem Wellenlängenbereich von 700 bis 1200 nm transparent sind, und worin die stoffschlüssige Verbindung an den jeweiligen Überkreuzungsstellen mittels Absorption von Licht einer Wellenlänge aus dem Wellenlängenbereich von 700 bis 1200 nm durch ein an den Überkreuzungen zwischen Kett- bzw. Maschinenrichtungsfäden und Schuss- bzw. Maschinenquerrichtungsfäden angeordnetes entsprechendes Licht absorbierendes Material bewirkt Ist.

4. Endlosflachgewebeband nach einem der Ansprüche 1 bis 2, worin die Kett- bzw. Maschinenrichtungsfäden (1) Licht einer Wellenlänge aus dem Wellenlängenbereich von 700 bis 1200 nm absorbieren und die Schuss- bzw. Maschinenquerrichtungsfäden (2) für Licht aus diesem Bereich transparent sind, und worin die stoffschlüssige Verbindung an Überkreuzungsstellen mittels Absorption von Licht einer Wellenlänge aus dem Wellenlängenbereich von 700 bis 1200 nm durch die Kett- bzw. Maschinenrichtungsfäden (1) bewirkt ist.

5. Endlosflachgewebeband nach einem der Ansprüche 1 bis 2, worin die Schuss- bzw. Maschinenquerrichtungsfäden (2) Licht einer Wellenlänge aus dem Wellenlängenbereich von 700 bis 1200 nm absorbieren und die Kett- bzw. Maschinenrichtungsfäden (1) für Licht aus diesem Bereich transparent sind, und worin die stoffschlüssige Verbindung an Überkreuzungsstellen mittels Absorption von Licht einer Wellenlänge aus dem Wellenlängenbereich von 700 bis 1200 nm durch die Schuss- bzw. Maschinenquerrichtungsfäden (2) bewirkt ist.

6. Verfahren zum Ausbilden einer stabilisierten Webnaht zum Verbinden der Enden (3, 4) eines Flachgewebebands (10) für die Herstellung eines Endlosgewebebands zum Einsatz in Maschinen für die Papierherstellung, das folgende Schritte umfasst:
- Bereitstellen eines Flachgewebebands (10) aus Garnen thermoplastischen Materials, dessen Kett- bzw. Maschinenrichtungsfäden (1) und/oder Schuss- bzw. Maschinenquerrichtungsfäden (2) für Licht einer Wellenlänge aus einem Wellenlängenbereich von 700 bis 1200 nm transparent sind, und an dessen Enden (3, 4) Kett- bzw. Maschinenrichtungsfäden (1) zum Ausbilden einer Webnaht (6) freigelegt sind,
- Ausbilden der Webnaht (6) zum Verbinden der Enden (3, 4) des Flachgewebebands (10) zu einem Endlosgewebeband (11),
- Einbringen eines das Licht aus dem Wellenlängenbereich von 700 bis 1200nm absorbierenden Materials In den Garnkontaktbereich von Überkreuzungen der Kett- bzw. Maschinenrichtungsfäden (1) mit Schuss- bzw. Maschinenquerrichtungsfäden(2), falls weder Kett- bzw. Maschinenrichtungsfäden (1) noch Schuss- bzw. Maschinenquerrichtungsfäden (2) das Licht aus dem Wellenlängenbereich von 700 bis 1200nm absorbieren, wobei das absorbierende Material wenigstens in Garnüberkreuzungen eingebracht wird, die innerhalb von drei oder mehr als drei streifenförmigen, treffstellenfreien Gewebebereichen (71, 72, 73) angeordnet sind, die sich über die gesamte Breite des Flachgewebebands (11) erstrecken und zwischen sich jeweils einen Treffstellen aufweisenden Gewebebereich (61, 62) abgrenzen, , wobei eine Treffstelle eine Stelle ist, an der zwei entlang einer geraden Linie aufeinander zu verlaufende Enden unterschiedlicher Kett- bzw. Maschinenrichtungsfäden (1) oder ein und desselben Kett- bzw. Maschinenrichtungsfadens (1) angeordnet sind, und i) die beiden aufeinander zu verlaufenden Enden an der Treffstelle aufeinander treffen und mit keinem Schuss-oder Maschinenquerrichtungsfaden gemeinsam verwoben sind, oder ii) die beiden aufeinander zulaufenden Enden in Maschinenrichtung zueinander beabstandet enden, wodurch an der Treffstelle ein, maximal zwei Schussfäden angeordnet sind, die mit keinem der beiden Enden verwoben sind oder iii) die beiden aufeinander zu verlaufenden Enden mit einem oder mehreren Schussfäden gemeinsam verwoben sind,
- Bestrahlen von wenigstens der drei oder mehr als drei streifenförmigen treffstellenfreien Gewebebereiche (71, 72, 73) mit Licht aus dem Wellenlängenbereich von 700 bis 1200nm zum Aufschmelzen der Garne an absorbierenden Bereichen, wobei wenigstens einer der Gewebebereiche (71, 72, 73) mit stoffschlüssig gefügten Überkreuzungsstellen von Kett- bzw. Maschinenrichtungsfäden (1) und Schuss- bzw. Maschinenquerrichtungsfäden (2) Innerhalb der die Enden des Flachgewebebands (10) zum Endlosflachgewebeband (11) verbindenden Webnaht (6) angeordnet ist.

7. Verfahren nach Anspruch 6, worin das Einbringen eines das Licht aus dem Wellenlängenbereich von 700 bis 1200nm absorbierenden Materials in den Garnkontaktbereich von Überkreuzungen der Kett- bzw. Maschinenrichtungsfäden (1) mit Schuss- bzw. Maschinenquerrichtungsfäden(2) einen Schritt zum Beschichten der Kett-bzw. Maschinenrichtungsfäden (1) des Flachgewebebands (10) im Bereich der Enden (3, 4) mit einem das Licht absorbierenden Material vor dem Ausbilden der Webnaht (6) umfasst.

8. Verfahren nach Anspruch 6, worin das Einbringen eines das Licht aus dem Wellenlängenbereich von 700 bis 1200nm absorbierenden Materials in den Garnkontaktbereich von Überkreuzungen der Kett- bzw. Maschinenrichtungsfäden (1) mit Schuss- bzw. Maschinenquerrichtungsfäden(2) einen Schritt zum Beschichten der Garne im Webnahtbereich und gegebenenfalls im angrenzenden Vollgewebebereich mit einem das Licht absorbierenden Material umfasst, wobei das Vollgewebe (5) aus dem Teil des Flachgewebebands (10) gebildet ist, aus dem zur Herstellung der Webnaht (6) keine Schuss- bzw. Maschinenquerrichtungsfäden (2) ausgelöst wurden..

9. Verfahren nach Anspruch 7 oder 8, worin das absorbierende Material außerhalb der Garnkontaktstellen an den Überkreuzungen von Kett- bzw. Maschinenrichtungsfäden (1) und Schuss- bzw. Maschinenquerrichtungsfäden (2) durch Spülen, Wischen oder Bürsten entfernt wird.

10. Verfahren nach einem der Ansprüche 6 bis 9, worin beim Ausbilden der Webnaht (6) die zwischen zwei troffstellenfreien Gewebebereichen mit stoffschlüssig verbundenen Garnüberkreuzungen angeordneten Treffstellen In Bezug auf die Richtung der Kett- bzw. Maschinenrichtungsfäden (1) an mehreren voneinander verschiedenen Stellen angeordnet werden.

## Claims

1. Endless flat-woven fabric tape for use in machines for papermaking, having mutually intersecting threads (1, 2), wherein the endless woven fabric tape (11) is manufactured from a flat-woven fabric tape (10) having ends and from a woven seam (6) which connects the ends of the flat-woven fabric tape (10) to the endless flat-woven fabric tape (11), wherein at least the warp or machine-direction threads (1), respectively, or the weft or machine-cross direction threads (2), respectively, are formed from yarns made from a thermoplastic polymer which is transparent to light of a wavelength in a wavelength range from 700 to 1200 nm, and wherein at least some of the yarns at intersection points of warp or machine-direction threads (1), respectively, and weft or machine-cross direction threads (2), respectively, are interconnected in a materially integral manner by means of a material which is disposed at the yarn contact region of the intersection points and absorbs light in the wavelength range from 700 to 1200 nm,
**characterized in that** the intersection points thus joined in a materially integral manner are disposed within three or more than three stripe-shaped fabric regions (71, 72, 73) which are free of meeting points, which extend across the entire width of the flat-woven fabric tape (11), and which between them delimit in each case one fabric region (61, 62) which contains meeting points, wherein a meeting point is a point at which two ends, running towards one another along a straight line, of different warp or machine-direction threads (1), respectively, or of one and the same warp or machine-direction thread (1) are disposed, and i) the two ends running towards one another meet at the meeting point and are not interwoven with any common weft or machine-cross direction thread, or ii) the two ends running towards one another terminate so as to be spaced apart in the machine direction, on account of which one, at most two, weft threads which are not interwoven with any of the two ends are disposed at the meeting point, or iii) the two ends running towards one another are interwoven with one or a plurality of common weft threads, and wherein at least one of the fabric regions (71, 72, 73) is disposed having intersection points of warp or machine-direction threads (1), respectively, and weft or machine-cross direction threads (2), respectively, which are joined in a materially integral manner within the woven seam (6) which connects the ends of the flat-woven fabric tape (10) to the endless flat-woven fabric tape (11).

2. Endless flat-woven fabric tape according to Claim 1, wherein one or two of the fabric regions (71, 72, 73) which contain intersection points which are joined in a materially integral manner at least partially outside of the woven seam (6) reach into the main woven fabric (5), wherein the main woven fabric (5) is formed by that part of the flat-woven fabric tape (10) from which no weft or machine-cross direction threads (2), respectively, have been picked for manufacturing the woven seam (6).

3. Endless flat-woven fabric tape according to Claim 1 or 2, wherein the warp or machine-direction threads (1), respectively, and weft or machine-cross direction threads (2), respectively, are transparent to light of a wavelength in a wavelength range from 700 to 1200 nm, and wherein the materially integral connection at the respective intersection points is caused by means of absorption of light of a wavelength in the wavelength range from 700 to 1200 nm by a material which is disposed at the intersections of warp or machine-direction threads, respectively, and weft or machine-cross direction threads, respectively, and which absorbs corresponding light.

4. Endless flat-woven fabric tape according to one of Claims 1 to 2, wherein the warp or machine-direction threads (1), respectively, absorb light of a wavelength in the wavelength region from 700 to 1200 nm and the weft or machine-cross direction threads (2), respectively, are transparent to light of this range, and wherein the materially integral connection at intersection points is caused by means of absorption of light of a wavelength in the wavelength range from 700 to 1200 nm by the warp or machine-direction threads (1), respectively.

5. Endless flat-woven fabric tape according to one of Claims 1 to 2, wherein the weft or machine-cross direction threads (2), respectively, absorb light of a wavelength in the wavelength range from 700 to 1200 nm, and the warp or machine-direction threads (1), respectively, are transparent to light of this range, and wherein the materially integral connection at intersection points is caused by means of absorption of light of a wavelength in the wavelength range from 700 to 1200 nm by the weft or machine-cross direction threads (2), respectively.

6. Method for configuring a stabilized woven seam for connecting the ends (3, 4) of a flat-woven fabric tape (10) for manufacturing an endless woven fabric tape for use in machines for papermaking, comprising the following steps:
- providing a flat-woven fabric tape (10) of yarns of a thermoplastic material, the warp or machine-direction threads (1), respectively, and/or the weft or machine-cross direction threads (2), respectively, of which are transparent to light of a wavelength in the wavelength range from 700 to 1200 nm, and on the ends (3, 4) of which warp or machine-direction threads (1) are exposed for configuring a woven seam (6);
- configuring the woven seam (6) for connecting the ends (3, 4) of the flat-woven fabric tape (10) to an endless woven fabric tape (11);
- incorporating a material which absorbs light in the wavelength range from 700 to 1200 nm into the yarn contact region of intersections of the warp or machine-direction threads (1), respectively, and weft or machine-cross direction threads (2), respectively, in the case that neither warp or machine-direction threads (1), respectively, nor weft or machine-cross direction threads (2), respectively, absorb light in the wavelength range from 700 to 1200 nm, wherein the absorbent material is incorporated at least into the yarn intersections which are disposed within three or more than three stripe-shaped fabric regions (71, 72, 73) which are free of meeting points, which extend across the entire width of the flat-woven fabric tape (11), and which between them delimit in each case one fabric region (61, 62) which contains meeting points, wherein a meeting point is a point at which two ends, running towards one another along a straight line, of different warp or machine-direction threads (1), respectively, or of one and the same warp or machine-direction thread (1) are disposed, and i) the two ends running towards one another meet at the meeting point and are not interwoven with any common weft or machine-cross direction thread, or ii) the two ends running towards one another terminate so as to be spaced apart in the machine direction, on account of which one, at most two, weft threads which are not interwoven with any of the two ends are disposed at the meeting point, or iii) the two ends running towards one another are interwoven with one or a plurality of common weft threads;
- radiating at least the three or more than three stripe-shaped fabric regions (71, 72, 73) which are free from meeting points, using light in the wavelength range from 700 to 1200 nm, to melt the yarns at absorbent regions, wherein at least one of the fabric regions (71, 72, 73) having intersection points joined in a materially integral manner of warp or machine-direction threads (1), respectively, and weft or machine-cross direction threads (2), respectively, is disposed within the woven seam (6) which connects the ends of the flat-woven fabric tape (10) to the endless flat-woven fabric tape (11).

7. Method according to Claim 6, wherein incorporating a material which absorbs light in the wavelength range from 700 to 1200 nm into the yarn contact region of intersections of the warp or machine-direction threads (1), respectively, and weft or machine-cross direction threads (2), respectively, prior to configuring the woven seam (6) comprises a step for coating the warp or machine-direction threads (1), respectively, of the flat-woven fabric tape (10) in the region of the ends (3, 4) with a light-absorbent material.

8. Method according to Claim 6, wherein incorporating a material which absorbs light in the wavelength range from 700 to 1200 nm into the yarn contact region of intersections of the warp or machine-direction threads (1), respectively, and weft or machine-cross direction threads (2), respectively, comprises a step for coating the yarns in the region of the woven seam and, if applicable, in the adjoining region of the main fabric with a light-absorbent material, wherein the main fabric (5) is formed by that part of the flat-woven fabric tape (10) from which no weft or machine-cross direction threads (2), respectively, have been picked for manufacturing the woven seam (6).

9. Method according to Claim 7 or 8, wherein the absorbent material outside of the yarn contact points at the intersections of warp or machine-direction threads (1), respectively, and weft or machine-cross direction threads (2), respectively, is removed by rinsing, wiping, or brushing.

10. Method according to one of Claims 6 to 9, wherein when configuring the woven seam (6), the meeting points having yarn intersections connected in a materially integral manner, which are disposed between two fabric regions which are free of meeting points, in relation to the direction of the warp or machine-direction threads (1), respectively, are disposed at a plurality of various points.

## Revendications

1. Toile sans fin tissée à plat pour l'utilisation dans des machines pour la fabrication de papier, comprenant des fils croisés (1, 2), la toile sans fin tissée (11) étant fabriquée à partir d'une toile tissée à plat (10) avec des extrémités et une jointure de tissage (6) reliant les extrémités de la toile tissée à plat (10) pour former la toile sans fin tissée à plat (11), au moins les fils de chaîne ou fils dans le sens machine (1) ou les fils de trame ou fils dans le sens travers (2) étant formés par des brins fabriqués à partir d'un polymère thermoplastique, qui est transparent à de la lumière ayant une longueur d'onde dans une plage de longueurs d'onde de 700 à 1200 nm, et au moins une partie des brins étant connectés les uns aux autres par liaison de matière au niveau de points de croisement de fils de chaîne ou fils dans le sens machine (1) et de fils de trame ou fils dans le sens travers (2) au moyen d'un matériau disposé au niveau de la région de contact des brins des points de croisement et absorbant la lumière de la plage de longueurs d'onde de 700 à 1200 nm,
**caractérisée en ce que** les points de croisement ainsi assemblés par liaison de matière sont disposés à l'intérieur de trois ou plus de trois zones de toile en forme de ruban sans points de jonction (71, 72, 73), qui s'étendent sur toute la largeur de la toile tissée à plat (11) et délimitent entre elles à chaque fois une zone de toile (61, 62) présentant des points de jonction, un point de jonction étant un point au niveau duquel deux extrémités de fils de chaîne ou fils dans le sens machine différents (1) s'étendant l'une vers l'autre le long d'une ligne droite sont disposées ou au niveau duquel un seul et même fil de chaîne ou fil dans le sens machine (1) est disposé, et i) les deux extrémités s'étendant l'une vers l'autre se rejoignant au niveau du point de jonction et n'étant tissées conjointement avec aucun fil de trame ou fil dans le sens travers ou ii) les deux extrémités s'étendant l'une vers l'autre se terminant dans le sens machine à distance l'une de l'autre, de sorte qu'au niveau du point de jonction soient disposés un, et au maximum deux, fils de trame qui ne sont tissés avec aucune des deux extrémités, ou iii) le deux extrémités s'étendant l'une vers l'autre étant tissées conjointement avec un ou plusieurs fils de trame, et au moins l'une des zones de toile (71, 72, 73) étant disposée avec des points de croisement assemblés par liaison de matière de fils de chaîne ou fils dans le sens machine (1) et de fils de trame ou fils dans le sens travers (2) à l'intérieur de la jointure de tissage (6) reliant les extrémités de la toile tissée à plat (10) pour former la toile sans fin tissée à plat (11).

2. Toile sans fin tissée à plat selon la revendication 1, dans laquelle une ou deux des zones de toile (71, 72, 73) contenant des points de croisement assemblés par liaison de matière s'étendent au moins en partie à l'extérieur de la jointure de tissage (6) dans la toile pleine (5), la toile pleine (5) étant formée de la partie de la toile tissée à plat (10) de laquelle aucun fil de trame ou fil dans le sens travers (2) n'a été détaché pour fabriquer la jointure de tissage (6).

3. Toile sans fin tissée à plat selon la revendication 1 ou 2, dans laquelle les fils de chaîne ou fils dans le sens machine (1) et les fils de trame ou fils dans le sens travers (2) sont transparents à la lumière ayant une longueur d'onde dans la plage de longueurs d'onde de 700 à 1200 nm, et dans laquelle la liaison de matière aux points de croisement respectifs est réalisée par absorption de lumière ayant une longueur d'onde dans la plage de longueurs d'onde de 700 à 1200 nm par un matériau correspondant absorbant de la lumière disposé au niveau des croisements entre les fils de chaîne ou fils dans le sens machine et les fils de trame ou fils dans le sens travers.

4. Toile sans fin tissée à plat selon l'une quelconque des revendications 1 à 2, dans laquelle les fils de chaîne ou fils dans le sens machine (1) absorbent de la lumière ayant une longueur d'onde dans la plage de longueurs d'onde de 700 à 1200 nm et les fils de trame ou fils dans le sens travers (2) sont transparents à de la lumière dans cette plage, et dans laquelle la liaison de matière au niveau de points de croisement est réalisée par absorption de lumière ayant une longueur d'onde dans la plage de longueurs d'onde de 700 à 1200 nm par les fils de chaîne ou fils dans le sens machine (1).

5. Toile sans fin tissée à plat selon l'une quelconque des revendications 1 à 2, dans laquelle les fils de trame ou fils dans le sens travers (2) absorbent de la lumière ayant une longueur d'onde dans la plage de longueurs d'onde de 700 à 1200 nm et les fils de chaîne ou fils dans le sens machine (1) sont transparents à de la lumière dans cette plage, et dans laquelle la liaison de matière au niveau de points de croisement est réalisée par absorption de lumière ayant une longueur d'onde dans la plage de longueurs d'onde de 700 à 1200 nm par les fils de trame ou fils dans le sens travers (2).

6. Procédé pour réaliser une jointure de tissage stabilisée pour relier les extrémités (3, 4) d'une toile tissée à plat (10) pour la fabrication d'une toile sans fin tissée pour l'utilisation dans des machines pour la fabrication de papier, le procédé comprenant les étapes suivantes :
- fourniture d'une toile tissée à plat (10) constituée de brins de matériau thermoplastique dont les fils de chaîne ou fils dans le sens machine (1) et/ou les fils de trame ou fils dans le sens travers (2) sont transparents à de la lumière ayant une longueur d'onde dans une plage de longueurs d'onde de 700 à 1200 nm, et aux extrémités de laquelle (3, 4) sont libérés des fils de chaîne ou fils dans le sens machine (1) pour réaliser une jointure de tissage (6),
- réalisation de la jointure de tissage (6) pour relier les extrémités (3, 4) de la toile tissée à plat (10) pour former une toile sans fin tissée (11),
- introduction d'un matériau absorbant la lumière dans la plage de longueurs d'onde de 700 à 1200 nm dans la zone de contact des brins de croisements des fils de chaîne ou fils dans le sens machine (1) avec des fils de trame ou fils dans le sens travers (2) si aucun des fils de chaîne ou fils dans le sens machine (1) et des fils de trame ou fils dans le sens travers (2) n'absorbent la lumière dans la plage de longueurs d'onde de 700 à 1200 nm, le matériau absorbant étant introduit au moins dans des croisements de brins qui sont disposés à l'intérieur de trois ou plus de trois zones de toile en forme de ruban sans points de jonction (71, 72, 73), qui s'étendent sur toute la largeur de la toile tissée à plat (11) et délimitent entre elles à chaque fois une zone de toile (61, 62) présentant des points de jonction, un point de jonction étant un point au niveau duquel deux extrémités de fils de chaîne ou fils dans le sens machine différents (1) s'étendant l'une vers l'autre le long d'une ligne droite sont disposées ou au niveau duquel un seul et même fil de chaîne ou fil dans le sens machine (1) est disposé, et i) les deux extrémités s'étendant l'une vers l'autre se rejoignant au niveau du point de jonction et n'étant tissées conjointement avec aucun fil de trame ou fil dans le sens travers ou ii) les deux extrémités s'étendant l'une vers l'autre se terminant dans le sens machine à distance l'une de l'autre, de sorte qu'au niveau du point de jonction soient disposés un, et au maximum deux, fils de trame qui ne sont tissés avec aucune des deux extrémités, ou iii) le deux extrémités s'étendant l'une vers l'autre étant tissées conjointement avec un ou plusieurs fils de trame,
- irradiation d'au moins les trois ou plus de trois zones de toile en forme de ruban sans points de jonction (71, 72, 73), avec de la lumière dans la plage de longueurs d'onde de 700 à 1200 nm pour faire fondre les brins au niveau de zones absorbantes, au moins l'une des zones de toile (71, 72, 73) étant disposée avec des points de croisement assemblés par liaison de matière de fils de chaîne ou fils dans le sens machine (1) et de fils de trame ou fils dans le sens travers (2) à l'intérieur de la jointure de tissage (6) reliant les extrémités de la toile tissée à plat (10) pour former la toile sans fin tissée à plat (11).

7. Procédé selon la revendication 6, dans lequel l'introduction d'un matériau absorbant la lumière dans la plage de longueurs d'onde de 700 à 1200 nm dans la zone de contact des brins de croisements des fils de chaîne ou fils dans le sens machine (1) avec des fils de trame ou fils dans le sens travers (2) comprend une étape de revêtement des fils de chaîne ou fils dans le sens machine (1) de la toile tissée à plat (10) dans la région des extrémités (3, 4) avec un matériau absorbant la lumière avant la réalisation de la jointure de tissage (6).

8. Procédé selon la revendication 6, dans lequel l'introduction d'un matériau absorbant la lumière dans la plage de longueurs d'onde de 700 à 1200 nm dans la zone de contact des brins de croisements des fils de chaîne ou fils dans le sens machine (1) avec des fils de trame ou fils dans le sens travers (2) comprend une étape de revêtement des brins dans la zone de la jointure de tissage et éventuellement dans la zone de toile pleine adjacente avec un matériau absorbant la lumière, la toile pleine (5) étant formée de la partie de la toile tissée à plat (10) de laquelle aucun fil de trame ou fil dans le sens travers (2) n'a été détaché pour fabriquer la jointure de tissage (6).

9. Procédé selon la revendication 7 ou 8, dans lequel le matériau absorbant est enlevé à l'extérieur des points de contact de brins au niveau des croisements de fils de chaîne ou fils dans le sens machine (1) et de fils de trame ou fils dans le sens travers (2) par rinçage, essuyage ou brossage.

10. Procédé selon l'une quelconque des revendications 6 à 9, dans lequel, lors de la réalisation de la jointure de tissage (6), les points de jonction disposés entre deux zones de toile sans points de jonction avec des croisements de brins connectés par liaison de matière sont disposés par rapport à la direction des fils de chaîne ou fils dans le sens machine (1) en plusieurs points différents les uns des autres.
